# DEMANDE DE BREVET EUROPEEN

(11) **EP 3 382 886 A1**
(43) Date de publication de la demande: **03.10.2018**
(21) Numéro de dépôt: 18163218.3
(22) Date de dépôt: 22.03.2018
(51) Int. Cl.: H02P 6/10, H02P 6/16

(54) **MOTEUR ÉLECTRIQUE, MOTO-RÉDUCTEUR, SYSTÈME D'ESSUYAGE ET PROCÉDÉ DE COMMANDE ASSOCIÉ**

(30) Priorité: 27.03.2017 FR 1752535
(71) Demandeur: Valeo Systèmes d'Essuyage, 78322 Le Mesnil Saint Denis (FR)
(72) Inventeur: HERRADA, Jose-Luis, 78322 LE MESNIL SAINT DENIS (FR)
(74) Mandataire: Valeo Systèmes d'Essuyage

(57) **Abrégé**

La présente invention concerne un moteur électrique (1) à courant continu sans balais, notamment pour un système d'essuyage, comprenant :
- un rotor (15) comprenant un aimant de commande,
- un stator (3) présentant des bobines d'excitation électromagnétique (9) du rotor (15),
- au moins un capteur à effet Hall (23) configuré pour détecter une position angulaire de l'aimant de commande (21),
- une unité de commande (25) connectée audit capteur à effet Hall (25) et configurée pour déterminer au moins une position angulaire du rotor (15) par rapport au stator (3) à partir des signaux (H) du capteur à effet Hall (23) et pour générer des signaux de commande (C) pour alimenter les bobines d'excitation électromagnétique (9) du stator (3) en fonction de la position angulaire du rotor (15) déterminée,
dans lequel l'unité de commande (25) comprend une horloge (26) et est configurée pour :
- estimer la position angulaire du rotor (15) à une pluralité d'instants prédéterminés (i₂₁...i₂₅) compris entre deux changements d'état du capteur à effet Hall (23) à partir des instants (I0, I1) des précédents changements d'état,
- déterminer des valeurs des tensions de commande associées aux positions angulaires du rotor (15) estimées pour les instants prédéterminés (i₂₁...i₂₅), lesdites valeurs de tension permettant de générer un signal de commande (C) sensiblement sinusoïdal,
- générer un signal de commande (C) sensiblement sinusoïdal à partir des valeurs de tension déterminées.

L'invention concerne également un moto-réducteur, un système d'essuyage et un procédé de commande du moteur électrique (1).

## Description

La présente invention concerne un moteur électrique et notamment un moteur électrique d'un moto-réducteur pour systèmes d'essuyage de véhicule automobile.

Différents types de moteurs électriques peuvent être utilisés dans un moto-réducteur et notamment des moteurs électriques à courant continu sans balai qui présentent de nombreux avantages comme une grande durée de vie, un encombrement et une consommation réduits ainsi qu'un faible niveau sonore.

Cependant, la commande des moteurs électriques à courant continu sans balai est plus complexe par rapport aux moteurs électriques à balais car pour permettre un bon fonctionnement, il est nécessaire de connaître précisément la position angulaire du rotor du moteur électrique à courant continu sans balai.

En effet, de tels moteurs électriques comprennent des bobines d'excitation électromagnétique disposées au niveau du stator et alimentées alternativement via un onduleur pour permettre l'entraînement d'aimants permanents disposés sur le rotor.

On dénombre trois types de commande pour commuter les interrupteurs de l'onduleur et alimenter les bobines d'excitation électromagnétique :
- la commande en blocs en utilisant par exemple trois capteurs à effet Hall pour déterminer les positions angulaires du rotor aux instants des changements de commutation,
- la commande sans capteur ou « sensorless » où on applique une séquence prédéfinie au démarrage puis on détermine la position angulaire du rotor à partir des forces contre électromotrices mesurées lorsque la vitesse de rotation est suffisante, cependant cette commande ne permet pas des démarrages avec un couple élevé,
- la commande sinusoïdale qui permet d'augmenter la constante de couple et d'avoir une régulation plus en douceur qui permet de réduire le bruit, cependant cette commande nécessite un encodeur précis pour déterminer la position angulaire du rotor à chaque instant ce qui rend cette solution coûteuse.

Dans le cas d'un moteur électrique destiné à être utilisé dans un moto-réducteur d'un système d'essuyage pour véhicule automobile, il convient d'avoir à la fois un moteur électrique permettant d'effectuer un démarrage avec un couple élevé (par exemple en cas d'essuie-glace collé par des saletés ou par le gel), un moteur électrique permettant d'avoir un couple élevé à haute vitesse de rotation (en cas de pare-brise sec), un moteur émettant un bruit faible et un coût de revient réduit.

La présente invention vise donc à fournir une solution pour permettre une commande efficace d'un moto-réducteur pour système d'essuyage pouvant fournir un couple élevé au démarrage et à haute vitesse tout en limitant le bruit de fonctionnement et le coût de revient.

A cet effet, la présente invention concerne un moteur électrique à courant continu sans balais, notamment pour un système d'essuyage, comprenant :
- un rotor comprenant un aimant de commande,
- un stator présentant des bobines d'excitation électromagnétique du rotor,
- au moins un capteur à effet Hall configuré pour détecter une position angulaire de l'aimant de commande,
- une unité de commande connectée audit capteur à effet Hall et configurée pour déterminer au moins une position angulaire du rotor par rapport au stator à partir des signaux du capteur à effet Hall et pour générer des signaux de commande pour alimenter les bobines d'excitation électromagnétique du stator en fonction de la position angulaire du rotor déterminée,
dans lequel l'unité de commande comprend une horloge et est configurée pour :
- estimer la position angulaire du rotor à une pluralité d'instants prédéterminés compris entre deux changements d'état du capteur à effet Hall à partir des instants des précédents changements d'état,
- déterminer des valeurs des tensions de commande associées aux positions angulaires du rotor estimées pour les instants prédéterminés, lesdites valeurs de tension permettant de générer un signal de commande sinusoïdal ou sensiblement sinusoïdal,
- générer un signal de commande sinusoïdal ou sensiblement sinusoïdal à partir des valeurs de tension déterminées.

L'estimation d'une position angulaire du rotor à des instants intermédiaires entre les signaux transmis par un capteur à effet Hall permet de recréer un encodeur précis pour un coût réduit et ainsi permettre de générer un signal de commande sinusoïdal sans avoir besoin d'utiliser un encodeur précis coûteux.

La présente invention concerne également les aspects suivants qui peuvent être combinés entre eux pour fournir de nouveau

L'unité de commande est configurée pour générer un signal de commande en blocs à partir des changements d'état du, au moins un, capteur à effet Hall pour des vitesses de rotation inférieures à un premier seuil prédéterminé et pour générer un signal de commande sensiblement sinusoïdal pour des vitesses de rotation supérieures au premier seuil prédéterminé.

L'unité de commande est configurée pour générer un signal de commande sinusoïdal avec une avance de phase prédéterminée lorsque la vitesse de rotation dépasse un deuxième seuil prédéterminé.

Le premier seuil prédéterminé correspond à une vitesse de rotation égale à 10% de la vitesse de rotation maximale.

L'unité de commande est configurée pour générer un signal de commande sinusoïdal avec une avance de phase prédéterminée lorsque le couple à fournir est supérieur à un seuil prédéterminé.

Le moteur électrique comprend au moins deux capteurs à effet Hall et dans lequel l'unité de commande est configurée pour générer un signal de commande sensiblement sinusoïdal à partir du signal fourni par un seul des capteurs à effet Hall.

La présente invention concerne également un moto-réducteur, notamment pour système d'essuyage, comprenant un moteur électrique tel que décrit précédemment couplé à un réducteur.

La Présente invention concerne également un système d'essuyage, notamment pour véhicule automobile, comprenant un moto-réducteur tel que décrit précédemment.

La présente invention concerne également un procédé de commande d'un moteur électrique à courant continu sans balais, notamment pour un système d'essuyage, comprenant :
- un rotor comprenant un aimant de commande,
- un stator présentant des bobines d'excitation électromagnétique du rotor,
- au moins un capteur à effet Hall configuré pour détecter une position angulaire de l'aimant de commande,
- une unité de commande connectée audit capteur à effet Hall et configurée pour déterminer une position angulaire du rotor par rapport au stator à partir des signaux du capteur à effet Hall et pour générer des signaux de commande pour alimenter les bobines d'excitation électromagnétique du stator en fonction de la position angulaire du rotor déterminée,
dans lequel le procédé comprend les étapes suivantes:
- on estime la position angulaire du rotor à une pluralité d'instants prédéterminés compris entre deux changements d'état du capteur à effet Hall à partir des instants des précédents changements d'état,
- on détermine les valeurs des tensions de commande associées aux positions angulaires du rotor estimées pour les instants prédéterminés, lesdites valeurs de tension permettant de générer un signal de commande sensiblement sinusoïdal,
- on génère un signal de commande sensiblement sinusoïdal à partir des valeurs de tension déterminées.

Le procédé comprend également les aspects suivants :
L'étape d'estimation de la position angulaire du rotor à une pluralité d'instants prédéterminés compris entre deux changements d'état du capteur à effet Hall est réalisée à partir des instants des deux précédents changements d'état du capteur à effet Hall en supposant que la vitesse de rotation est constante.

L'étape d'estimation de la position angulaire du rotor à une pluralité d'instants prédéterminés compris entre deux changements d'état du capteur à effet Hall est réalisée à partir des instants d'au moins trois précédents changements d'état du capteur à effet Hall pour prendre en compte une évolution de la vitesse de rotation du rotor.

Le procédé comprend une étape préliminaire de sauvegarde d'une table de correspondance entre des positions angulaires du rotor et des tensions de commande associées pour obtenir un signal de commande sensiblement sinusoïdal et dans lequel l'étape de détermination des valeurs des tensions de commande associées aux positions angulaires du rotor comprend la recherche de ces valeurs dans la table de correspondance sauvegardée.

Le procédé comprend une étape dans laquelle on génère un signal de commande sensiblement sinusoïdal avec une avance de phase prédéterminée lorsque la vitesse de rotation du rotor dépasse un deuxième seuil prédéterminé.

Le procédé comprend une étape dans laquelle on génère un signal de commande sensiblement sinusoïdal avec une avance de phase prédéterminée lorsque le couple à fournir est supérieur à un seuil prédéterminé.

Le signal de commande avec une avance de phase est obtenu en introduisant un décalage temporel pour l'application des tensions de commande déterminées.

Pour des vitesses de rotation inférieures à un premier seuil prédéterminé, on génère un signal de commande en blocs à partir des changements d'état d'au moins un capteur à effet Hall et pour des vitesses de rotation supérieures au premier seuil prédéterminé, on génère un signal de commande sensiblement sinusoïdal à partir des signaux issus d'un seul capteur à effet Hall selon le procédé de commande décrit précédemment.

D'autres caractéristiques et avantages de l'invention ressortiront de la description suivante, donnée à titre d'exemple et sans caractère limitatif, en regard des dessins annexés sur lesquels :
- la figure 1 représente un schéma d'une vue en perspective d'un moto-réducteur électrique à courant continu sans balai,
- La figure 2 représente un schéma d'une unité de commande reliée à un capteur à effet Hall et à des bobines d'excitation électromagnétique ;
- les figures 3a et 3b représentent respectivement une vue en perspective d'une aimant de commande associé à un capteur a effet Hall et du signal fourni par le capteur à effet Hall lors d'une rotation de l'aimant de commande,
- la figure 4 représente un diagramme du signal fourni par un capteur à effet Hall en fonction du temps lors d'une rotation de l'aimant de commande, le signal estimé pour le prochain cycle et le signal de commande obtenu pour le prochain cycle,
- la figures 5 représente un diagramme du signal fourni par un capteur à effet Hall en fonction du temps lors d'une rotation de l'aimant de commande et le signal estimé pour le prochain cycle décalé temporellement.

Sur toutes les figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation ou que les caractéristiques s'appliquent seulement à un seul mode de réalisation. De simples caractéristiques de différents modes de réalisation peuvent également être combinées ou interchangées pour fournir d'autres réalisations.

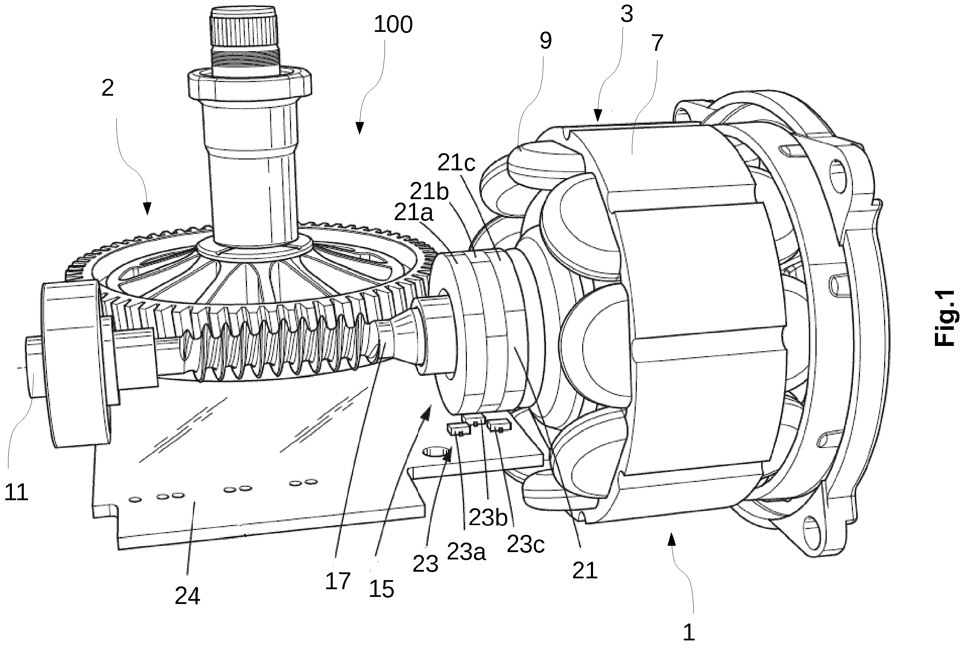

La figure 1 représente une vue schématique en perspective d'un moto-réducteur 100 comprenant un moteur électrique 1 et un réducteur 2 et destiné à entraîner par exemple un système d'essuyage de véhicule automobile.

Le moteur électrique 1 comprend un stator 3 comprenant des tôles statoriques 7 généralement entourées et protégées par une carcasse (non représentée). Les tôles statoriques 7 sont configurées pour recevoir des bobines d'excitation électromagnétique 9. Le moteur électrique 1 comprend également deux paliers 11 (seul l'un des paliers 11 est visible sur la figure 1) disposés aux deux extrémités d'un arbre moteur 17. Les paliers 11 permettent d'assurer la liaison mécanique entre le stator 3 et un rotor 15. Des aimants permanents (non représentés) sont disposés sur l'arbre moteur 17. A l'état monté du moteur électrique 1, les aimants permanents sont configurés pour venir en regard des bobines d'excitation électromagnétique 9. Ainsi, l'alimentation des bobines d'excitation électromagnétique 9 avec des signaux de commande adaptés permet de créer un champ tournant qui provoque la mise en rotation du rotor 15 via les aimants permanents.

De plus, afin de pouvoir établir des signaux de commande adaptés, il est nécessaire de connaître la position angulaire du rotor 15. Pour cela, le moteur électrique 1 comprend également un aimant de commande 21 monté sur l'arbre moteur 17. L'aimant de commande 21 est multipolaire et comprend au moins une paire de pôles magnétiques. A l'état monté, l'aimant de commande 21 est destiné à venir en regard avec au moins un capteur à effet Hall 23. Le capteur à effet Hall 23 est par exemple positionné sur une carte à circuit imprimé 24 fixée sur le stator 3. L'aimant de commande 21 peut comprendre plusieurs couches axiales multipolaires si plusieurs capteurs à effet Hall 23 sont utilisés. Dans le cas présent, trois capteurs à effet Hall notés 23a, 23b et 23c sont associés respectivement à trois couches axiales multipolaires notées 21a, 21b et 21c de l'aimant de commande 21.

Le nombre de capteurs à effet Hall 23 est généralement compris entre 1 et 3. Le(s) capteur(s) à effet Hall 23 est (sont) configuré(s) pour détecter un pôle magnétique de l'aimant de commande 21 et par conséquent une position angulaire de l'aimant de commande 21.

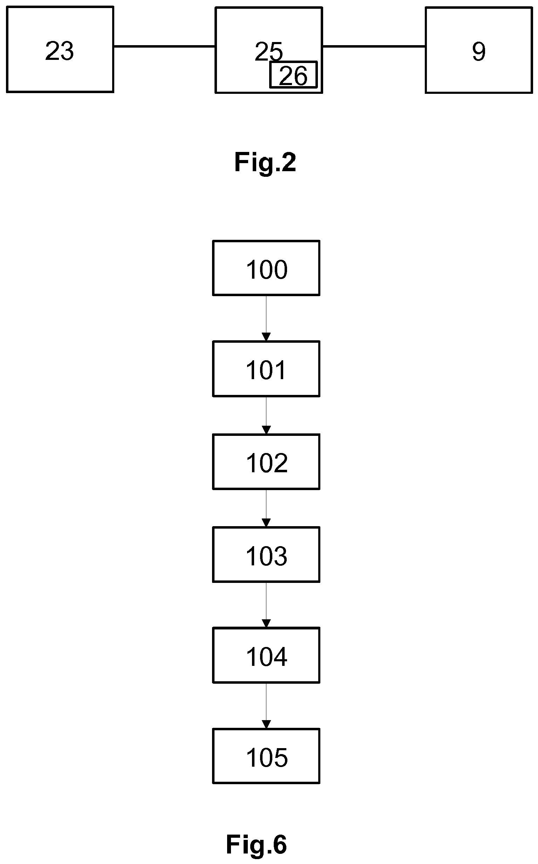

Le moteur électrique 1 comprend également une unité de commande 25, représentée sur la figure 2, et configurée pour recevoir les signaux générés par le(s) capteur(s) à effet Hall 23 et pour déterminer une position angulaire du rotor 15 à partir des signaux issus dudit (desdits) capteur(s) à effet Hall 23. L'unité de commande 25 peut être implémentée au niveau de la carte à circuit imprimé 24. L'unité de commande 25 est connectée au(x) capteur(s) à effet Hall 23 par exemple via un circuit imprimé ou par une connexion filaire ou par des moyens de communication sans fil connus de l'homme du métier. L'unité de commande 25 est également configurée pour générer des signaux de commande à partir de la position angulaire du rotor 15 déterminée. Ces signaux de commande sont utilisés pour alimenter les bobines d'excitation électromagnétique 9 du stator 3 afin d'entraîner la rotation du rotor 15. De plus, l'unité de commande 25 comprend une horloge 26 et est configurée pour estimer la position angulaire du rotor 15 entre deux changements d'état du signal ou des signaux issus du (des) capteur(s) à effet Hall 23.

De préférence, seuls les signaux issus d'un seul capteur à effet Hall 23 sont utilisés par l'unité de commande 25 pour estimer les positions angulaires intermédiaires pour éviter d'insérer une erreur dans l'estimation due à des tolérances de positionnement des autres capteurs à effet Hall 23. Ainsi, dans la suite de la description, un seul capteur à effet Hall 23 sera utilisé pour réaliser l'estimation des positions angulaires intermédiaires mais il est également possible d'utiliser les signaux issus de plusieurs capteurs à effet Hall 23 sans sortir du cadre de la présente invention. Les erreurs de tolérance peuvent aussi être corrigées par un calibrage.

De plus, on se limitera à la description du cas où l'aimant de commande 21 comprend une paire de pôles magnétiques mais il est également possible d'utiliser un aimant de commande 21 comprenant un nombre de paire de pôles magnétiques plus important sans sortir du cadre de la présente invention.

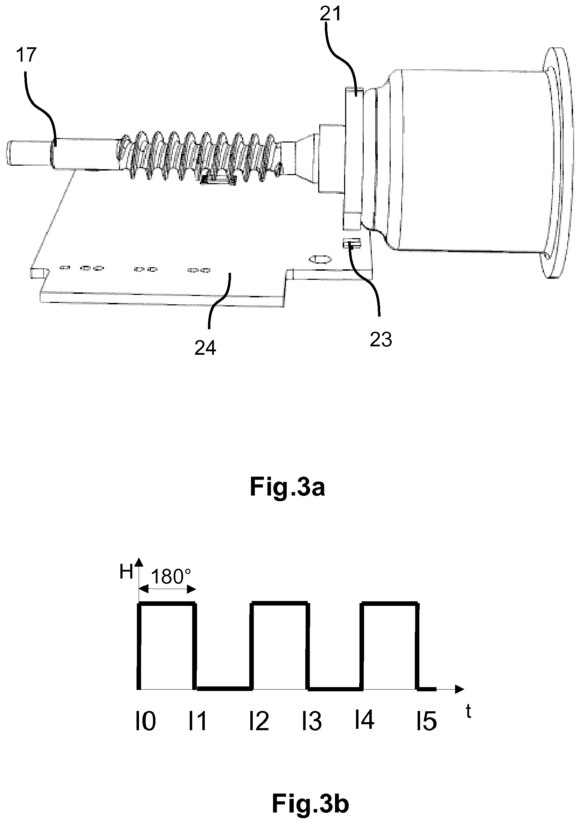

La figure 3a représente un exemple d'un aimant de commande 21 monté sur l'arbre 17 du rotor 15 comprenant une paire de pôles magnétiques et la figure 3b représente le signal H issu du capteur à effet Hall 23 au cours du temps lorsque la vitesse de rotation du rotor 15 supportant l'aimant de commande 21 est constante. Deux changements d'état (les instants des changements d'états étant référencés 10, I1...I5) successifs du capteur à effet Hall 23 correspondent dans ce cas à une rotation de 180° du rotor 15.

Pour réaliser l'estimation de la position angulaire du rotor 15 entre deux changements d'état du signal H issu d'un capteur à effet Hall 23, l'unité de commande 25 peut estimer la vitesse de rotation du rotor 15 grâce, par exemple, à deux changements d'état précédents du signal H issu du capteur à effet Hall 23. Ainsi, à partir de cette vitesse de rotation estimée, la position angulaire du rotor 15 à chaque instant d'horloge 26 peut être estimée.

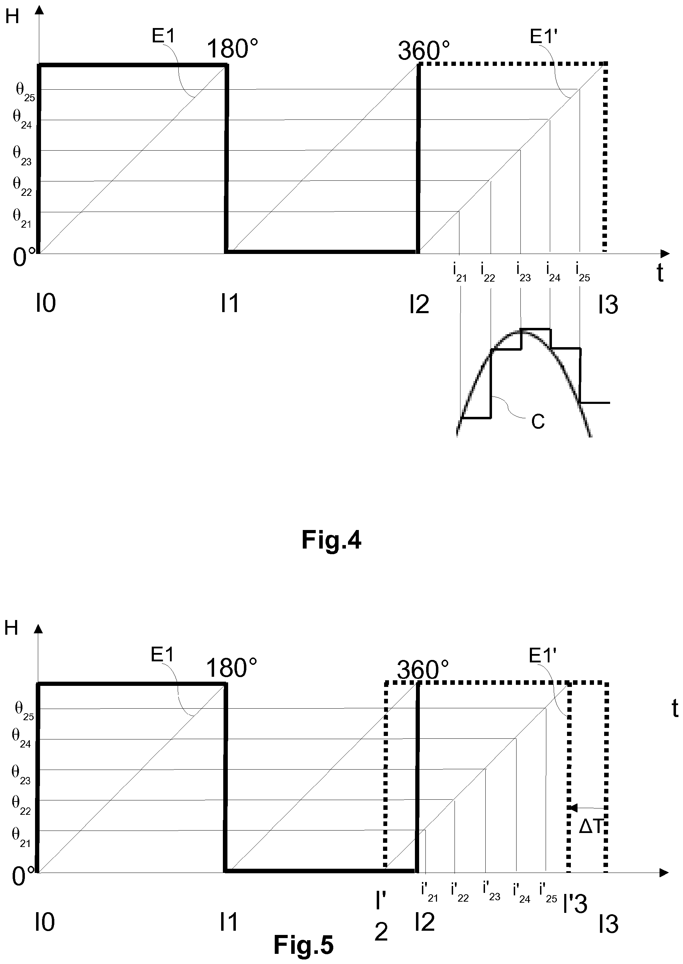

La figure 4 représente un exemple d'un graphique représentant le signal H issu du capteur à effet Hall 23 entre les instants I0 et I2 des changements d'état du capteur à effet Hall 23 de la figure 3a. A l'instant I2, il est possible à partir des instants I0 et I1 par exemple d'estimer l'instant I3 correspondant au changement d'état suivant, par exemple en considérant que l'intervalle de temps I2-I3 est égal à l'intervalle de temps I0-I1 (hypothèse d'une vitesse constante, hypothèse qui peut souvent être admise du fait de l'inertie du rotor 15). De plus, il est alors possible de déterminer la position angulaire du rotor 15 aux instants intermédiaires notés i21...i25 situées entre les instants des changements d'état I2 et I3 (puisque la vitesse est considérée constante entre I2 et I3). Le nombre d'instants intermédiaires désirés peut être choisi et n'est limité que par l'incrément minimal de l'horloge 26. Ainsi, il est possible d'obtenir la position du rotor 15 à des instants très rapprochés comme avec un encodeur précis et pour un coût réduit. La position angulaire du rotor 15 estimée aux différents instants intermédiaires i₂₁...i₂₅ permet alors d'appliquer une commande sinusoïdale de la même manière qu'avec un encodeur précis. Pour cela, les valeurs de tension à appliquer aux signaux de commande pour chaque position angulaire du rotor 15 correspondant aux instants intermédiaires i₂₁...i₂₅ peuvent être sauvegardées dans une base de données de l'unité de commande 25. Alternativement, ces valeurs peuvent être générées par l'unité de commande 25 à partir d'une équation mathématique prédéterminée. Ainsi, plus le nombre d'instants intermédiaires choisi sera grand, plus le signal de commande obtenu sera proche d'un signal sinusoïdal. La figure 4 représente un exemple d'un signal de commande C obtenu en considérant les instants intermédiaires i₂₁ à i₂₅. En effet, le signal obtenu est quasi-sinusoïdal ou sensiblement sinusoïdal puisqu'une valeur unique est appliquée au signal de commande entre deux instants intermédiaires, cependant, si la durée entre deux instants intermédiaires i₂₁...i₂₅ est suffisamment faible, le signal de commande C obtenu s'approche d'un signal sinusoïdal.

De plus, afin d'améliorer la précision de l'estimation de la position angulaire du rotor 15 aux instants intermédiaires i₂₁...i₂₅, il est également possible de tenir compte de plusieurs instants I0, Il... précédents pour prendre en compte une évolution de la vitesse de rotation sur plusieurs intervalles de temps entre deux changements d'état. Par exemple dans le cas de la figure 4, l'estimation de I3 et des points intermédiaires i₂₁...i₂₅ peut prendre en compte non seulement les instants I0 et I1 mais aussi des instants précédents. Une régression, par exemple une régression polynomiale ou hyperbolique ou autre, peut notamment être appliquée pour déterminer une fonction correspondant à l'évolution de la vitesse de manière à déterminer l'évolution de la vitesse entre les instants I2 et I3. Cette détermination est ensuite répétée au cours du temps en prenant en compte les instants des nouveaux changements d'état, par exemple à chaque instant correspondant à un changement d'état du signal H fourni par le capteur à effet Hall 23. Dans ce cas là, à l'instant I3, l'information correspondant à l'intervalle I1-I2 pourra être utilisée (par exemple en combinaison avec l'intervalle I0-I1) pour déterminer l'instant I4 et les instants intermédiaires entre I3 et I4.

De plus, en appliquant un décalage temporel sur les instants I1, 12...et les instants intermédiaire i₂₁...i₂₅, il est possible de créer une avance de phase du signal de commande C sinusoïdal créé. La figure 5 représente un diagramme sur lequel des instants I'2 et I'3 sont créés par un décalage temporel ΔT à partir des instants I2 et I3, ce qui permet également d'obtenir des instants intermédiaires i'₂₁...i'₂₅ décalés et donc d'obtenir un signal de commande C sinusoïdal avec une avance de phase. Cette avance de phase permet d'augmenter le couple fourni par le moteur électrique 1, l'avance de phase peut être choisie en fonction du couple désiré. L'avance de phase est par exemple appliquée lorsque la vitesse de rotation du rotor 15 dépasse un seuil prédéterminé, appelé ici deuxième seuil prédéterminé, et/ou que le couple désiré dépasse un seuil prédéterminé. L'application d'un signal de commande C avec une avance de phase dépend donc du couple à fournir.

Par ailleurs, l'estimation des positions angulaires du rotor 15 aux instants intermédiaires n'étant pas possible au démarrage, puisqu'il n'y a pas de signal de changement d'état antérieur pour estimer la vitesse. Ainsi, au démarrage, l'unité de commande 25 peut être configurée pour commander le moteur électrique 1 par une commande en blocs tant que la vitesse de rotation est inférieure à un premier seuil prédéterminé, par exemple 10 % de la vitesse de rotation maximale du rotor 15.

Pour effectuer cette commande en blocs, l'unité de commande 25 peut utiliser le signal ou les signaux issu(s) du ou des capteur(s) à effet Hall 23. Le moteur électrique 1 peut par exemple comprendre trois capteurs à effet Hall 23 espacés les uns des autres de 120° autour d'un aimant de commande 21 comprenant une paire de pôles magnétiques et fournissant la position angulaire du rotor 15 tous les 60° afin de déterminer les instants de commutation pour la commande en blocs ou en utilisant trois capteurs à effet Hall et un aimant de commande 21 comprenant trois couches axiales multipolaires disposées de manière à permettre un détection de la position angulaire du rotor 15 tous les 60°

Alternativement, un nombre réduit de capteurs à effet Hall 23 par exemple un seul capteur à effet Hall 23 peut être utilisé avec un aimant de commande 21 comprenant trois paires de pôles afin de détecter une position angulaire du rotor tous les 60° et déterminer ainsi les instants de commutation.

Une telle commande par blocs permet un démarrage du moteur électrique 1 avec un couple important. Une telle possibilité est importante dans le cas où le moteur électrique 1 est utilisé dans un moto-réducteur d'un dispositif d'essuyage pour véhicule automobile, notamment lorsque les balais d'essuyage adhèrent fortement au pare-brise du fait de saletés ou du gel.

Puis, lorsque la vitesse de rotation du rotor 15 du moteur électrique 1 dépasse le premier seuil prédéterminé, la commande sinusoïdale tel que décrite précédemment est appliquée. Une telle commande sinusoïdale (ou quasi-sinusoïdale) permet d'obtenir un couple important à haut régime et d'obtenir un fonctionnement plus doux et donc de limiter le bruit du moteur électrique 1. Le couple important permet d'obtenir un bon fonctionnement du dispositif d'essuyage même en cas de pare-brise sec par exemple et la réduction du bruit émis par le moteur électrique 1 permet d'améliorer le confort des passagers du véhicule.

La présente invention concerne également un moto-réducteur dans lequel le moteur électrique est couplé à un mécanisme réducteur et un système d'essuyage utilisant le moteur électrique 1 décrit précédemment, l'arbre de sortie du mécanisme réducteur étant par exemple relié à un bras d'essuie-glace, éventuellement par le biais d'une timonerie.

La présente invention concerne également un procédé de commande d'un moteur électrique 1 à courant continu sans balai. La figure 6 représente les différentes étapes du procédé. Certaines étapes peuvent être facultatives et l'ordre des étapes peut également différé, certaines étapes pouvant être simultanées.

L'étape préliminaire 100 concerne la sauvegarde d'une table de correspondance entre des positions angulaires du rotor 15 et des tensions de commande associées pour différentes commandes du moteur électrique 1. Alternativement, des fonctions mathématiques peuvent être sauvegardées pour permettre de calculer les tensions de commande associées aux différentes positions du rotor 15. Différentes fonctions mathématiques peuvent être associées à différentes commandes du moteur 1 en fonction de la vitesse de rotation désirée.

La première étape 101 consiste à établir une commande en blocs au démarrage du moteur électrique 1 et jusqu'à une vitesse de rotation du moteur électrique 1 correspondant à un premier seuil prédéterminé, par exemple 10 % de la vitesse de rotation maximale. La commande par blocs est établie en déterminant la position angulaire du rotor 15 (et donc les instants de commutation) à partir du signal issu d'au moins un capteur à effet Hall 23, généralement trois capteurs à effet Hall 23.

La deuxième étape 102 concerne l'estimation de la position angulaire du rotor 15 à des instants prédéterminés entre deux instants correspondant aux changements d'état d'un capteur à effet Hall 23. Ainsi, dans le cas d'un moteur électrique 1 comprenant plusieurs capteurs à effet Hall 23, on sélectionne le signal issu d'un des capteurs à effet Hall 23 et on estime la position angulaire du rotor 15 entre les instants de changement d'état du capteur à effet Hall 23. Cette estimation est par exemple réalisée dès que le moteur électrique 1 a atteint une vitesse de rotation correspondant à une valeur prédéfinie inférieure au seuil défini dans l'étape 101, par exemple 8 % de la vitesse de rotation maximale. L'estimation consiste à estimer une vitesse de rotation ou une évolution de la vitesse de rotation du moteur électrique 1 à partir des instants des changements d'état précédents et d'appliquer la même vitesse de rotation ou la même évolution de la vitesse de rotation sur l'intervalle de temps jusqu'à l'instant du changement d'état suivant du signal H issu du capteur à effet Hall 23. Cette détermination pouvant être réitérée et mise à jour à chaque nouveau changement d'état du capteur à effet Hall 23. L'estimation peut aussi être faite sur un intervalle de temps correspondant à plusieurs changements d'état du signal issu du capteur à effet Hall 23, par exemple sur un intervalle de temps de deux changements d'état correspondant à une rotation de 360° du moteur électrique dans le cas d'un aimant de commande comprenant deux pôles magnétiques. Ainsi, la vitesse de rotation ou évolution de la vitesse de rotation estimée permet de déterminer la position angulaire du rotor 15 à chaque instant et notamment à des instants prédéterminés sélectionnés.

La troisième étape 103 concerne la détermination d'une valeur de tension associée à chaque instant prédéterminé sélectionné. Pour cela, les valeurs de tensions associées aux différentes positions du rotor 15 pour obtenir un signal de commande C sinusoïdal correspondant à la commande du moteur électrique 1 sont sauvegardées dans une mémoire de l'unité de commande 25. Alternativement, ces valeurs de tensions peuvent être calculées par l'unité de commande 25 à partir d'une fonction mathématique dépendant de la position angulaire du rotor 15. Différentes fonctions mathématiques peuvent être associées à différentes commande du moteur électrique 1 en fonction de la vitesse de rotation désirée par exemple.

La quatrième étape 104 concerne la génération d'un signal de commande C pseudo-sinusoïdal à partir des valeurs de tension déterminés à l'étape 103. Ce signal de commande C généré est transmis aux bobines d'excitation électromagnétique 9 lorsque la vitesse de rotation du rotor 15 du moteur électrique 1 est supérieure au premier seuil prédéterminé pour produire un champ tournant et entraîner le rotor 15 en rotation.

La cinquième étape 105 est une étape facultative et concerne la génération d'un signal de commande C sensiblement sinusoïdal avec une avance de phase prédéterminée lorsque la vitesse de rotation du rotor 15 dépasse un deuxième seuil prédéterminé et/ou lorsque le couple à fournir dépasse une valeur prédéterminée. La valeur de l'avance de phase peut varier en fonction de la vitesse de rotation et/ou du couple à fournir de sorte que plus la rotation et/ou le couple à fournir sont importants et plus l'avance de phase est importante. L'avance de phase est obtenue en insérant un décalage temporel au niveau des instants intermédiaires de sorte que les valeurs de tension déterminées à l'étape 103 sont appliquées avec un temps d'avance ΔT comme décrit précédemment à partir des figures 4 et 5.

Ainsi, un tel procédé de commande permet d'obtenir un couple élevé au démarrage et à hautes vitesses de rotation si nécessaire tout en procurant un fonctionnement moins bruyant qu'avec une commande en blocs. De plus, un tel procédé ne nécessite pas d'équipements supplémentaires coûteux tel qu'un encodeur précis.

## Revendications

1. Moteur électrique (1) à courant continu sans balais, notamment pour un système d'essuyage, comprenant :
- un rotor (15) comprenant un aimant de commande,
- un stator (3) présentant des bobines d'excitation électromagnétique (9) du rotor (15),
- au moins un capteur à effet Hall (23) configuré pour détecter une position angulaire de l'aimant de commande (21),
- une unité de commande (25) connectée audit capteur à effet Hall (25) et configurée pour déterminer au moins une position angulaire du rotor (15) par rapport au stator (3) à partir des signaux (H) du capteur à effet Hall (23) et pour générer des signaux de commande (C) pour alimenter les bobines d'excitation électromagnétique (9) du stator (3) en fonction de la position angulaire du rotor (15) déterminée,
**caractérisé en ce que** l'unité de commande (25) comprend une horloge (26) et est configurée pour :
- estimer la position angulaire du rotor (15) à une pluralité d'instants prédéterminés (i₂₁...i₂₅) compris entre deux changements d'état du capteur à effet Hall (23) à partir des instants (I0, I1) des précédents changements d'état,
- déterminer des valeurs des tensions de commande associées aux positions angulaires du rotor (15) estimées pour les instants prédéterminés (i₂₁...i₂₅), lesdites valeurs de tension permettant de générer un signal de commande (C) sinusoïdal ou sensiblement sinusoïdal,
- générer un signal de commande (C) sinusoïdal ou sensiblement sinusoïdal à partir des valeurs de tension déterminées.

2. Moteur électrique (1) selon la revendication 1 dans lequel l'unité de commande (25) est configurée pour générer un signal de commande en blocs à partir des changements d'état du, au moins un, capteur à effet Hall (23) pour des vitesses de rotation inférieures à un premier seuil prédéterminé et pour générer un signal de commande (C) sensiblement sinusoïdal pour des vitesses de rotation supérieures au premier seuil prédéterminé.

3. Moteur électrique (1) selon la revendication 1 ou 2 dans lequel l'unité de commande (25) est configurée pour générer un signal de commande (C) sinusoïdal avec une avance de phase (ΔT) prédéterminée lorsque la vitesse de rotation dépasse un deuxième seuil prédéterminé.

4. Moteur électrique (1) selon la revendication 3 dans lequel le premier seuil prédéterminé correspond à une vitesse de rotation égale à 10% de la vitesse de rotation maximale.

5. Moteur électrique (1) selon l'une des revendications précédentes dans lequel l'unité de commande (25) est configurée pour générer un signal de commande (C) sinusoïdal avec une avance de phase (ΔT) prédéterminée lorsque le couple à fournir est supérieur à un seuil prédéterminé.

6. Moteur électrique (1) selon l'une des revendications précédentes comprenant au moins deux capteurs à effet Hall (23) et dans lequel l'unité de commande (25) est configurée pour générer un signal de commande (C) sensiblement sinusoïdal à partir du signal (H) fourni par un seul des capteurs à effet Hall (23).

7. Moto-réducteur (100), notamment pour système d'essuyage, comprenant un moteur électrique (1) selon l'une des revendications précédentes couplé à un réducteur (2).

8. Système d'essuyage, notamment pour véhicule automobile, comprenant un moto-réducteur selon la revendication 7.

9. Procédé de commande d'un moteur électrique à courant continu sans balais (1), notamment pour un système d'essuyage, comprenant :
- un rotor (15) comprenant un aimant de commande (21),
- un stator (3) présentant des bobines d'excitation électromagnétique (9) du rotor (15),
- au moins un capteur à effet Hall (23) configuré pour détecter une position angulaire de l'aimant de commande (21),
- une unité de commande (25) connectée audit capteur à effet Hall (23) et configurée pour déterminer une position angulaire du rotor (15) par rapport au stator (3) à partir des signaux du capteur à effet Hall (23) et pour générer des signaux de commande (C) pour alimenter les bobines d'excitation électromagnétique (9) du stator (3) en fonction de la position angulaire du rotor (15) déterminée,
**caractérisé en ce que** le procédé comprend les étapes suivantes:
- on estime (102) la position angulaire du rotor (15) à une pluralité d'instants prédéterminés compris entre deux changements d'état du capteur à effet Hall (23) à partir des instants des précédents changements d'état,
- on détermine (103) les valeurs des tensions de commande associées aux positions angulaires du rotor (15) estimées pour les instants prédéterminés, lesdites valeurs de tension permettant de générer un signal de commande (C) sensiblement sinusoïdal,
- on génère (104) un signal de commande (C) sensiblement sinusoïdal à partir des valeurs de tension déterminées.

10. Procédé de commande selon la revendication 9 dans lequel l'étape (102) d'estimation de la position angulaire du rotor (15) à une pluralité d'instants prédéterminés compris entre deux changements d'état du capteur à effet Hall (23) est réalisée à partir des instants des deux précédents changements d'état du capteur à effet Hall (23) en supposant que la vitesse de rotation est constante.

11. Procédé de commande selon la revendication 9 dans lequel l'étape (102) d'estimation de la position angulaire du rotor (15) à une pluralité d'instants prédéterminés compris entre deux changements d'état du capteur à effet Hall (23) est réalisée à partir des instants d'au moins trois précédents changements d'état du capteur à effet Hall (23) pour prendre en compte une évolution de la vitesse de rotation du rotor (15).

12. Procédé de commande selon l'une des revendications 9 à 11 comprenant une étape préliminaire (100) de sauvegarde d'une table de correspondance entre des positions angulaires du rotor (15) et des tensions de commande associées pour obtenir un signal de commande (C) sensiblement sinusoïdal et dans lequel l'étape (103) de détermination des valeurs des tensions de commande associées aux positions angulaires du rotor (15) comprend la recherche de ces valeurs dans la table de correspondance sauvegardée.

13. Procédé de commande selon l'une des revendications 9 à 12 dans lequel on génère (105) un signal de commande (C) sensiblement sinusoïdal avec une avance de phase prédéterminée (ΔT) lorsque la vitesse de rotation du rotor (15) dépasse un deuxième seuil prédéterminé.

14. Procédé de commande selon l'une des revendications 9 à 13 dans lequel on génère (105) un signal de commande (C) sensiblement sinusoïdal avec une avance de phase prédéterminée lorsque le couple à fournir est supérieur à un seuil prédéterminé.

15. Procédé de commande selon l'une des revendications 13 ou 14 en combinaison avec la revendication 12 dans lequel, le signal de commande (C) avec une avance de phase est obtenu en introduisant un décalage temporel (ΔT) pour l'application des tensions de commande déterminées.

16. Procédé de commande dans lequel, pour des vitesses de rotation inférieures à un premier seuil prédéterminé, on génère (101) un signal de commande en blocs à partir des changements d'état d'au moins un capteur à effet Hall (23) et pour des vitesses de rotation supérieures au premier seuil prédéterminé, on génère (104) un signal de commande (C) sensiblement sinusoïdal à partir des signaux issus d'un seul capteur à effet Hall (23) selon le procédé de commande de l'une des revendications 9 à 15.
